(19) Europäisches Patentamt
European Patent Office
Office européen des brevets

(11) **EP 1 583 704 B1**

(12) **EUROPEAN PATENT SPECIFICATION**

(45) Date of publication and mention
of the grant of the patent:
**10.06.2009 Bulletin 2009/24**

(51) Int Cl.:
***F16L 33/025*** (2006.01)

(21) Application number: **03759270.6**

(86) International application number:
**PCT/US2003/029129**

(22) Date of filing: **14.10.2003**

(87) International publication number:
**WO 2004/065251 (05.08.2004 Gazette 2004/32)**

(54) **HOSE CLAMP WITH INTERNAL CLAMPING SURFACES DEVOID OF GAPS, STEPS OR DISCONTINUITIES**

SCHLAUCHKLEMME MIT INNEREN KLEMMFLÄCHEN OHNE LÜCKEN, ABSÄTZE ODER UNTERBRECHUNGEN

COLLIER DE SERRAGE A SURFACE INTERIEURE EXEMPTE DE TROUS, DE MARCHES, OU DE DISCONTINUITES

(84) Designated Contracting States:
**AT BE BG CH CY CZ DE DK EE ES FI FR GB GR HU IE IT LI LU MC NL PT RO SE SI SK TR**

(30) Priority: **14.01.2003 US 439799 P**
**21.03.2003 US 392952**

(43) Date of publication of application:
**12.10.2005 Bulletin 2005/41**

(73) Proprietor: **Hans Oetiker AG**
**Maschinen- und Apparatefabrik**
**8812 Horgen (CH)**

(72) Inventor: **Craig, Paul M., Jr.**
**Silver Spring, MD 20904 (US)**

(74) Representative: **Strehl Schübel-Hopf & Partner**
**Maximilianstrasse 54**
**80538 München (DE)**

(56) References cited:
**EP-A1- 1 191 270          US-A- 1 277 076**
**US-A- 4 299 012          US-A- 4 315 348**
**US-A- 4 711 001          US-A- 4 712 278**
**US-A- 5 305 499          US-A- 5 339 496**
**US-A- 5 544 392          US-A- 5 564 167**
**US-A- 5 669 113          US-A1- 5 177 836**
**US-B1- 6 240 603          US-B1- 6 243 924**
**US-B1- 6 247 206          US-B1- 6 457 212**
**US-B1- 6 560 823          US-B2- 6 463 632**
**US-B2- 6 598 269**

**Description**

FIELD OF THE INVENTION

The present invention relates to hose clamps, especially to open-type hose clamps with internal clamping surfaces devoid of any gaps, steps or discontinuities, which improves the guidance of the relative movement between inner and outer overlapping band portions by simple and effective means, which enables an economic manufacture as regards length of clamping band required for a given size clamp, and to the method of making such clamps involving only simple manufacturing procedures with already available materials.

BACKGROUND OF THE INVENTION

With the use of new, relatively harder and thinner plastic hose materials, it became important, especially with so-called open-type hose clamps made from galvanized or stainless steel band material, to provide internal clamping surfaces devoid of any step, gap or discontinuity, particularly at the end of the inner overlapped clamping band portion. Additionally, with a tightening device forming a gap under the same, such as, for example, with so-called "Oetiker" ears, it became important in the tightened condition of the clamp to bridge the gap underneath the tightening device by the full band width of the inner clamping band portion to avoid a leakage problem. An effective solution, which proved commercially immensely successful and which has been used in hundreds of millions of clamps, is described in U.S. Patent 4,299,012 which, as shown in Figure 1 of this application and corresponding to Figure 19 of this patent, includes a male member in the form of a narrow tongue-like extension at the end of the full width inner band portion adapted to engage through an opening forming a female member that commences in the outer band portion at the beginning of a step-like portion having a height substantially corresponding to the thickness of the clamping band. In addition to atypical "Oetiker" ear, generally designated by reference numeral which consists of two parallel, outwardly extending leg portions interconnected by a bridging portion provided with a reinforcing groove or depression, this type of prior art clamp also shows a mechanical connection consisting of a so-called guide or suspension hook and of two cold-deformed, deep-drawn support hooks adapted to engage in apertures in the outer band portion. The channel adjoining the opening in the step-like portion is formed by cuts whereby the cover is pressed out relative to the remaining lateral band portions. However, the cover can also be omitted by simply cutting off the material forming the opening in the channel so that the tongue-like extension is then freely exposed to the outside as disclosed in U.S. Patent 4,315,348.

The use of a so-called combined guide and support hook, formed by a tab-like member pressed out of the inner band portion is disclosed in U.S. Patent 5,305,499 in which the combined guide and support hook is punched and pressed out within the area of the full band width inner band portion (12) and extends at substantially right angle to the outer surface of the band material.

In connection with so-called earless clamps, two pressed-out tool-engaging tab-like members with tool-engaging surfaces are disclosed in U.S. Patent 4,712,278. This patent additionally shows in Figures 5 and 6 thereof two tab-like members in substitution of the tool-engaging embossment illustrated in Figures 1 through 3 of this patent.

The use of one or more tab-like members pressed-out of the inner band portion and engaging in one or more guide slots to guide overlapping band portions is known as such from U.S. Patents 5,339,496, 5,544,392 and 5,177,836. However, these tab-like members as disclosed in the prior art are pressed-out within the center area of the full width inner band portion.

In all of the aforementioned prior art hose clamps, the tongue-like portions are realized by simply cutting off lateral band material on both sides whereby these cutaway lateral band portions thus remain unused and are simply wasted.

EP 1 191 270 A1 discloses a clamp in accordance with the first part of claim 1. There, the two tab-like members provided at either side of the tongue-like portion engage a common opening formed in the center of the outer band portion.

SUMMARY OF THE INVENTION

It is an object of the present invention to provide a hose clamp of the type disclosed in U.S. Patent 4,299,012 which makes more effective use of the clamping band material, assures a simple, reliable guidance in the relative movement of overlapping band portions, enables a saving in the length of the clamping band required for a given clamp size, and allows a clamp size tolerance range in which, in particular, the maximum diametric dimension of the range can be optimized as well as to an economic method of manufacturing such clamps.

The underlying problems are solved according to the present invention in that at least a part of the tongue-like extension at the end of the inner clamping band portion, which forms the male member, is formed and defined by tab-like members adapted to engage in guide slots in the outer clamping band portion. This arrangement provides a simple low-friction guide arrangement which can be realized without complicated additional manufacturing steps and which reliably guides the overlapping inner and outer band portions during tightening of the tightening device, especially if the teachings of my prior U.S. Patent 6,560,823 are applied as regards the location of the beginning of the male profile at the full band width of the inner clamping band portion.

According to another feature of the present invention, the clamp may also include a lost-motion arrangement that enables savings in clamping band material and an assurance of predetermined clamping force when reaching $d_{max}$. Though the savings may be relatively small, they become significant with the annual large-volume production of these types of clamps, usually in the hundreds of millions of clamps.

## BRIEF DESCRIPTION OF THE DRAWINGS

These and further objects, features and advantages of the present invention will become more apparent from the following description when taken in conjunction with the accompanying drawing which shows, for purposes of illustration only, several embodiments in accordance with the present invention, and wherein:

Figure 1 is a perspective view of a prior art clamp of the type disclosed in U.S. Patent 4,299,012;

Figure 2 is a partial somewhat schematic top plan view of a clamp on the area of the outer band portion that includes the mechanical connection and the guide arrangement in accordance with the present invention, in the condition with the mechanical connection engaged but prior to tightening, and flattened out for better understanding, also indicating the location of a plastically deformable ear, the end of the full width inner band portion and the end of the tongue-like extension according to the present invention;

Figure 3 is a partial somewhat schematic side elevational view, flattened out for better understanding, of the area of the clamp illustrated in Figure 2 and only schematically indicating the mechanical connection;

Figure 4 is a somewhat schematic partial side elevational view of only the inner clamping band portion illustrated in Figure 3, omitting again the parts of the mechanical connection for the sake of clarity and showing the tab-like members defining a part of the tongue-like extension provided only in the area near the free end of the tongue-like portion;

Figure 5 is a somewhat schematic partial top plan view of the inner clamping band portion of Figure 4;

Figure 6 is a somewhat schematic partial bottom plan view, again flattened out, on the inside of a clamp as disclosed in my copending application Serial No. 10/044,968, now U.S. Patent 6,560,823, and provided with a guide arrangement of this invention, illustrating the parts thereof with the mechanical connection engaged but prior to contraction of the ear;

Figure 7 is a somewhat schematic partial side elevational view of Figure 6;

Figure 8 is a somewhat schematic partial top plan view, similar to Figure 6;

Figure 9 is a schematic partial side elevational view of the inner clamping band portion with a modified embodiment of a tab-like member according to this invention;

Figure 10 is a somewhat schematic partial top plan view, flattened out for better understanding, on a part of the outer clamping band portion of a modified embodiment of a clamp in its pre-assembly position and with a so-called lost-motion arrangement in accordance with the present invention, effective during tightening of the tightening device, this Figure illustrating the parts thereof with the mechanical connection and the guide arrangement engaged but prior to tightening of the clamp;

Figure 11 is a somewhat schematic partial side elevational view of the clamp illustrated in Figure 10;

Figure 12 is a somewhat schematic partial top plan view on a part of the inner clamping band portion of a clamp utilizing the lost-motion arrangement of Figure 10;

Figure 13 is a somewhat schematic exploded partial cross-sectional view of the inner and outer clamping band portions of Figure 11, taken along line 13-13 of Figure 10 and illustrating the pre-assembly obtainable in the clamp of Figures 10-12;

Figure 14 is a somewhat schematic cross-sectional view, flattened out for better understanding, of a modified embodiment of a clamp with a guide arrangement and with a lost-motion arrangement according to this invention, illustrating the mechanical connection engaged and the tightening device not yet tightened;

Figure 15 is a somewhat schematic partial side elevational view, on a larger scale, of the inner clamping band portion with a tab-like member for the mechanical connection provided with an undercut as used in the clamp of Figure 14;

Figure 16 is a somewhat schematic partial top plan view on a modified embodiment of the free end of the outer clamping band portion provided with a reinforcement according to this invention;

Figure 17 is a somewhat schematic partial cross-sectional view taken along line 17-17 of Figure 16;

Figures 18 and 19 are somewhat schematic partial top plan views on the outer clamping band end portion illustrating the position of the tab-like members of the mechanical connection in the pre-assembly position and in the position of these tab-like members upon reaching the initial plastic deformation position, respectively;

Figure 20 is a somewhat schematic partial top plan view, similar to Figures 18 and 19, on the outer clamping band end portion and illustrating a space-saving arrangement when an additional deep-drawn support hook is used in the mechanical connection; and

Figure 21 is a somewhat schematic partial side elevational view, similar to Figure 15, of a modified embodiment of a tab-like member for the mechanical connection of this invention.

## DETAILED DESCRIPTION OF THE DRAWINGS

Referring now to the drawing wherein like reference numerals are used throughout the various views to designate like parts, it should be recalled, as explained in my U.S. Patent 6,240,603 that practically all of the tensional forces are present in the outer clamping band portion while the overlapped inner clamping band portion is substantially devoid of any tensional forces but provides the internal clamping surfaces within the area of overlap of the two clamping band portions including the area of the tightening device. As also explained in my last-mentioned U.S. patent, with the use of a so-called "Oetiker" ear, it is necessary to plastically deform the ear a predetermined initial amount before the ear properly functions as tightening device. In other words, ignoring compressibility of the hose material, the maximum diametric dimension $d_{max}$ of the tolerance range $d_{max} - d_{min}$ of the clamp should not exceed the total range of contraction of the ear-like tightening device less the required initial contraction of the plastically deformable ear to attain proper functioning which will be referred to hereinafter as "initial plastic deformation." The amount of "initial plastic deformation" depends on such factors as dimensions of the ear, the thickness of the clamping band and the type of clamping band material. However, as a general indication, this "initial plastic deformation" for this type of tightening device involves for a typical "Oetiker" ear between about 40% to about 60% of the full tightening range, i.e., of the maximum contraction of the ear. This means, in turn, that the tolerance range of a given size clamp is the amount of plastic deformation left after the point of "initial plastic deformation" of the ear has been reached, i.e., after the ear has reached its predetermined configuration corresponding to its "initial plastic deformation," resembling normally an omega shape. For purposes of convenience of explanation of this invention, it is assumed that the required plastic deformation to reach the "initial plastic deformation" of the plastically deformable ear capable of functioning as tightening device is about 50% of the maximum contraction of the ear. Additionally, leaving aside any compressibility of the hose material and any spring-back of the ear after a contraction, an overlap between the tongue-like portion **61** and the lateral band portions **11'** of the outer clamping band portions **10a** that remain beyond the step-like portion **67** is necessary, as explained in my prior U.S. Patent 6,457,212, to achieve a stepless transition at the end of the inner clamping band portion when the plastic deformation has reached the beginning of the available tolerance range, i.e., in the assumed example of a clamp of this invention, when 50% of the maximum contraction of the ear has been reached.

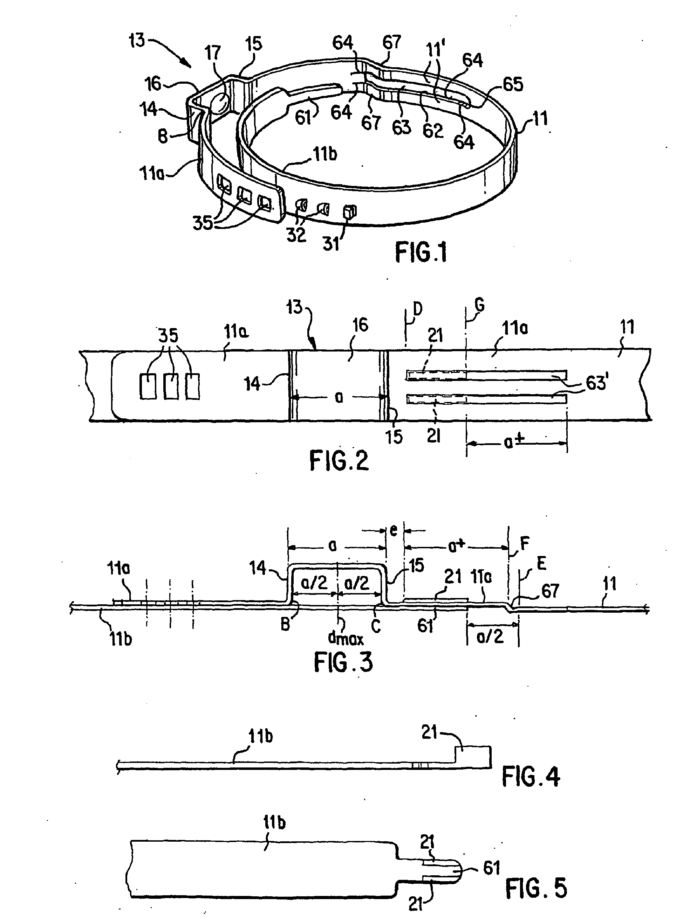

Referring now to Figures 2-5 of the drawing, the outer band portion **11a** again includes an ear generally designated by reference numeral **13** which has two outwardly extending leg portions **14** and **15** interconnected by a bridging portion **16** that is preferably provided with a reinforcement (not shown) of any known type as disclosed, for example, in U.S. Patents 5,305,499; 5,339,406 and in my U.S. Patent 6,243,924. The ends of the inner leg portions **14** and **15** where they pass over into the outer band portion **11a** are indicated by reference characters **B** and **C** while the maximum plastic deformation limited by contact with one another of points **B** and **C** is indicated by the distance **a**. In the assumed example, the "initial plastic deformation" will therefore be reached when a contraction of about **a/2** has been reached.

The inner band portion **11b** includes a male member in the form of a tongue-like extension **61** the sides of which, according to this invention, are defined at least in part by bent-up tab-like members **21** adapted to engage in guide slots **63'**. With the mechanical connection engaged but prior to any contraction of the ear, the end of the full band width inner band portion is indicated at **D** and is spaced from the leg portion **15** by a small distance **e**. The beginning of the step-like portion **67,** designated by reference character **F** must then be located from point **D** by at least a distance corresponding to maximum contraction of the ear, i.e., by a distance **a**, preferably by a distance a$^+$ in excess of distance **a** as a precautionary measure.

The length of the tongue-like portion must then be such that it engages in and overlaps the step-like portion **67** a predetermined distance to assure a stepless transition from the inner band portion to the outer band portion when the tightening device is tightened to the point of its "initial plastic deformation," i.e., by an amount of 50% in the given example. This means that the distance from the inner beginning of the tongue-like extension indicated by reference character **D** to the free end thereof indicated by reference character **G,** which represents the length of the tongue-like portion **61,** must be at least somewhat greater than one-half the distance **a**. In other words the free end of the tongue-like extension **G** must reach point **E** at a predetermined distance beyond the step-like portion **67** when the tightening device is plastically deformed by an amount of **a/2**. Figures 2 and 3 illustrate an embodiment in which the tab-like members **21** extend over substantially the full length of the tongue-like extension **61**. However, the length and location of the tab-like members **21** may also be only near the free end area of the tongue-like extension (Figures 4 and 5) to avoid interference with the jaws of the tightening tool or in some cases even in an area intermediate the ends of the tongue-like extension. The length of these tab-like members depends also on the size of the clamp, i.e., with very small clamp sizes, the tab-like members are most likely to extend over substantially the entire length of the tongue-like extension while with larger sizes, they are more likely to extend only over a part of the length of the tongue-like extension **61** to minimize friction during contraction of the ear, preferably only over the free end area of the tongue-like extension to assure proper guidance.

Details of the mechanical connection have been omitted in Figures 2 and 3 for the sake of clarity and may be of the type as shown in Figure 1 herein or may be of any other known type. For example, if a permanent connection is desired, a spot-welded connection may be used with a stainless steel clamping band material and a laser-type spot-welded connection may be used with a galvanized steel clamping band material. Additionally, the mechanical connection may also be as shown in U.S. Patents 4,315,348 or 5,305,499 or any other type as known in the prior art.

The invention described in connection with Figures 2-5 provides a simple low-friction guide arrangement which is important so that the tongue-like extension remains properly aligned with the window in the step-like portion **67** during contraction of the ear. The inner clamping band portion **11b** might otherwise become non-aligned with the window by swerving laterally, thereby causing problems in he proper functioning of the clamp. This is realized according to this invention without additional material, involving already existing cutting operations--changing the cuts for the window in step-like portion **67** into simple cuts forming slots **63'**--and a readily realizable bending-up operation while at the same time allowing clamping band material savings of the order attainable with my prior U.S. Patent 6,240,603 B1. The existence of the guide slots **63'** also facilitates the realization of the step-like portion **67** and of the remaining cover portion **63**. Furthermore, the use of the guide slots **63'** in the area of the step-like portion **67** permits optimization in that area, i.e., of the width of the remaining lateral band portions **11'** in relation to the width of the tongue-like extension **61**.

The guide arrangement according to this invention is of even greater importance in the proper tightening of a clamp, in which the end of the full band width of the inner clamping band portion is located within the area of the tolerance range $d_{max}$ to $d_{min}$ as disclosed in my aforementioned U.S. Patent 6,560,823. This is so because in that case the full width of the inner clamping band portion **11b** reaches the full width outer clamping band portion only after passing beyond leg portion **15** and thus depends on the safe and continuous alignment of the tongue-like portion **61** with the window in step-like portion **67**.

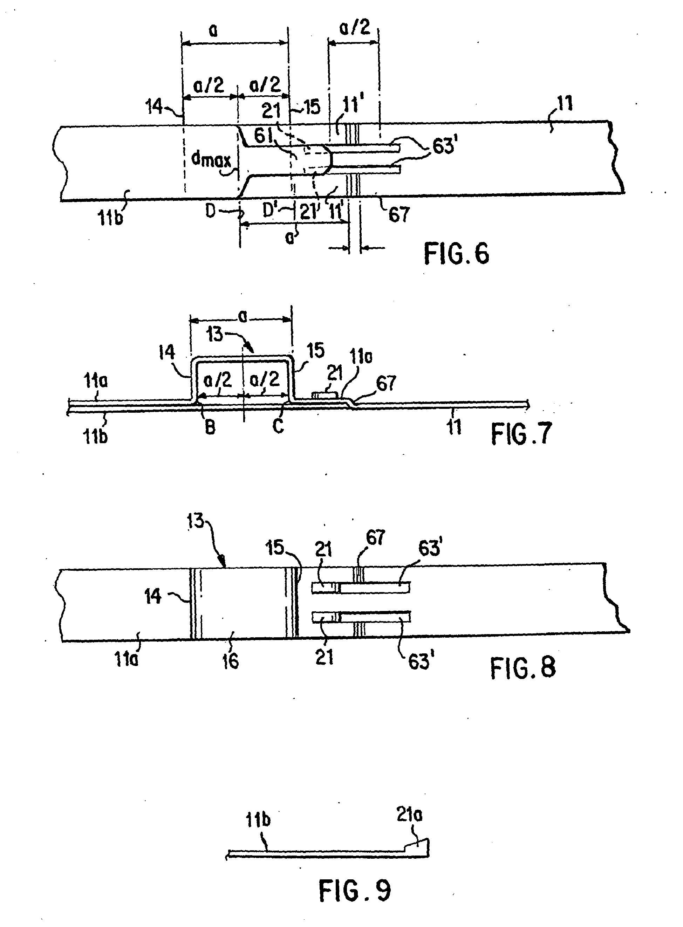

Figure 6 herein, which is based on Figure 6 of my aforementioned patent, and Figure 7, which is a side elevational view of Figure 6, illustrate a guide arrangement with tab-like members **21** and guide slots **63'** of the present invention as applied to the material-saving clamp of my U.S. Patent 6,560,823. As explained in this patent, the end of the full band width inner clamping band portion **11b** and the beginning of the tongue-like portion **61** is located at point **D** within the area defined by $d_{max}$ and $d_{min}$ of the tolerance range when the mechanical connection is engaged but prior to contraction of the ear **13,** so that the point **D'** comes to lie at least a small distance beyond the inner end **C** of leg portion **15** of the ear **13** when the "initial plastic deformation" is reached. The guide arrangement **21, 63'** according to this invention is thereby highly desirable if not necessary as it forces the tongue-like extension **61** to proceed along a prescribed linear path during the "initial plastic deformation" and thus avoids misalignment between the tongue-like extension **61** and the opening or window formed in the step-like portion **67.** For the sake of economy of clamping band material, the tab-like members **21** are thereby preferably located only in the area of the free end of the tongue-like extension **61** which is of such length as to avoid interference between the jaws of a tightening tool and the tab-like members **21** when the tightening tool is applied to leg portions **14** and **15**. As the tab-like members **21** only perform a guide function, they may also be of limited height and/or may be shaped with a slant, preferably resembling the shape of the jaw, to avoid interference with the jaws of the pincer-like tightening tool as schematically indicated at **21a** in Figure 9.

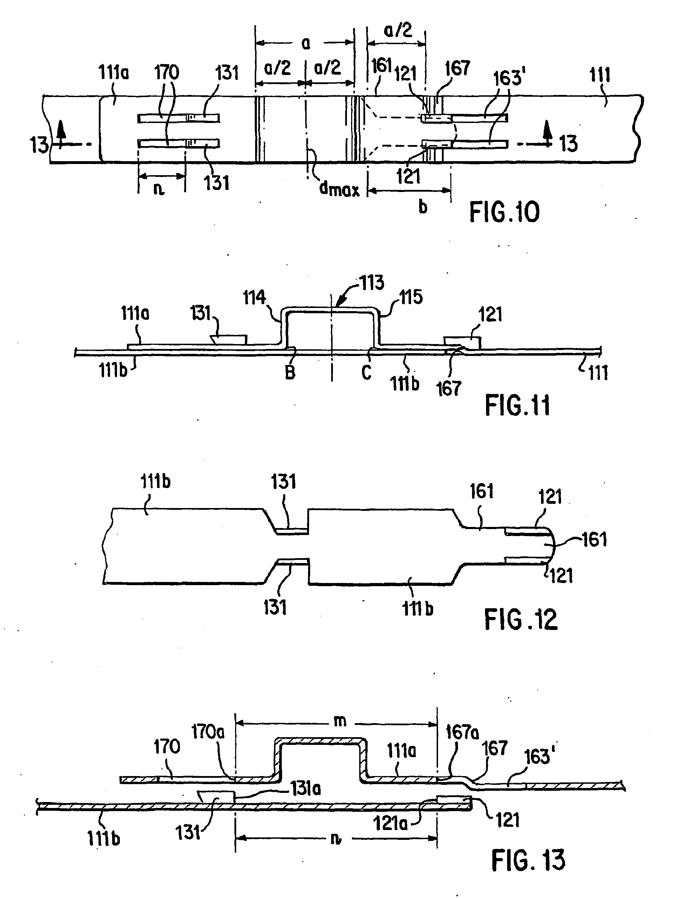

Before describing the embodiment with the lost-motion arrangement of this invention illustrated in Figures 10-13, a few words are believed appropriate to explain the underlying theoretical principles of the present invention. Though the "initial plastic deformation" of a typical "Oetiker"-type ear depends on such variable factors as thickness and material used for the clamping band, e.g., stainless steel or galvanized steel, the size of the plastically deformable ear, the size of the clamp, etc., a plastic deformation of about 40% to about 60% is the general rule of thumb to reach the point of "initial plastic deformation." For purposes of explanation, it will be assumed again that the "initial plastic deformation" of the ear is 50%, i.e., is **a/2** in Figure 10 where the maximum plastic deformation of the ear is **a**, reached when the points **B** and **C** (Figure 3) come into contact with one another. The compressibility of the hose as also any limited spring-back after plastic deformation is ignored because it is inconsequential to the explanation of the present invention.

As mentioned before, an "initial plastic deformation" of the plastically deformable ear by 50% in the given example limits the available tolerance range $d_{max} - d_{min}$ to a theoretical maximum value of 50% of the remaining deformation range of the ear. As known, the circumferential length 1 of a clamping band required for a given clamp size, i.e., for the circle formed by the clamp at any given moment, is a function of the diameter **d** and is given by the formula

$$l = \pi d$$

where **1** is the circumferential length of the clamping surfaces in the clamp circle and **d** is the diametric dimension of the clamp at any given moment of contraction of the ear. If a reduction of the diametric dimension occurs during the entire contraction of the ear, i.e., over the distance **a**, the length of the clamping band material for the circle of the clamping surfaces would decrease from an initial circle length $l_o$

$$l_o = \pi \, d_o$$

where $d_o$ is the diametric dimension of the clamp with the mechanical connection engaged but prior to any contraction of the ear, to a length of maximum contraction of the ear

$$l_{min} = \pi \, d_{min}$$

where $d_{min}$ is the minimum diametric dimension of the tolerance range of a given clamp size, i.e., when points **B** and **C** are in contact with one another:

Since $l_o - l_{min}$ is about equal to **a,** the maximum decrease $\Delta d_{max}$ in diametric dimension in the prior art clamps is

$$d_o - d_{min} = \frac{\Delta l_{max}}{\pi} \qquad\qquad (1)$$

where $\Delta l_{max}$ is the maximum change in circumferential length of the circle formed by the clamp in the prior art clamps. It is assumed for purposes of these discussions that the required length of the overlapped inner clamping band portion is the same for different diametric dimensions of a given clamp size. However, this assumption is inconsequential because the required length of the overlapped inner clamping band portion can be decreased as the size of the clamp is decreased so that this assumption favors the present invention.
Equation (1) can be rewritten as

$$\Delta l_{max} = l_o - l_{min} = \Delta d_{max} \bullet \pi \qquad\qquad (2)$$

As $l_{min}$ is a fixed value depending on contact with each other of points **B** and **C**, $\Delta l$ therefore depends on $l_o$. This means that one could start with an initial reduced clamping band length $l_o$, if one could avoid the reduction in diametric dimension during the "initial plastic deformation." In other words, the clamping band length for a given clamp size could be reduced by about **a/2** in the given example if no reduction in diametric dimension occurred during the initial contraction of the ear corresponding to the initial plastic deformation, i.e., corresponding to **a/2** in the given example.

One could then start with an initial clamping band length in the assumed example that is

$$l_{o'} = l_o - a/2$$

which means a savings of about **a/2** in band material. This is achieved in a modified embodiment of the clamp according to the present invention by a so-called "lost-motion arrangement" as illustrated in Figures 10 through 13 in which reference numerals of the 100 series are used for corresponding parts of the embodiment of Figures 2-5. In this embodiment, the mechanical connection between the inner and outer clamping band portions is achieved with the use of hooks which are in the form of tab-like members **131** cut and pressed-out on both sides of the inner clamping band portion **111b** into a position at substantially right angle to the clamping band surface. The tab-like members **131,** which are quite capable to act as support hooks and are preferably in the form of combined guide and support hooks as disclosed in the prior art, are adapted to engage in guide slots **170** which are of greater length by a distance **n** than the length of the tab-like members **131**. The excess length **n** of the guide slots **170** in the discussed example is preferably at most equal to the value of "initial plastic deformation," in the given example to **a/2,** but may also be less, depending on various factors,

such as desired $d_{max}$, acceptable band length for a given size clamp and the actual value of the "initial plastic deformation," and can be readily determined empirically.

The distance m (Figure 13) between the ends of the tab-like members **121** and the ends of the tab-like members **131** nearer the tightening device **113** is thereby so chosen that these tab-like members can engage in their respective slots **170** and **163'** only when the tab-like members **131** are located in their guide slots **170** in the end area near the tightening device **113,** and the tab-like members **121** are located in their guide slots **163'** in the end area also near the tightening device **113** (Figure 13). As the ear **113** is plastically deformed, no reduction in diametric dimension **d** of the clamp takes place while the lost-motion arrangement is operable, assuming no significant friction between overlapping band portions. Assuming the legs **114** and **115** of the ear **113** are plastically deformed by equal amounts, it means that the tab-like members **121** remain during the lost-motion operation in their relative position engaging the inner ends of guide slots **163'** because any movement of the inner end of the leg portion **115** and therewith of the outer clamping band portion **111a** to the left in Figure 11 which would change the relative position of tab-like members **121** is accompanied by an equal counterclockwise movement of the inner clamping band portion **111b** and thus of the tab-like members **121** to the left in Figure 10. In the meantime, movement of the leg portion **114** and with it of the free end of the outer clamping band portion **111a** to the right as viewed in Figure 10, would not affect the position of tab-like members **131** which can still move freely in guide slots **170** even though guide members **131** undergo relative movement in the guide slots **170.** It is only when the tab-like members **131** come into engagement with the ends of guide slots **170** away from leg portion **114** that further contraction of the ear **113** will cause the circumferential length of the clamp to decrease. This means in practice that for a given clamp size having a value of $d_{max}$ in the tolerance range, one can design the clamp so that the initial diametric dimension can be reduced in the discussed example by about one-half the distance of maximum contraction of the ear, i.e., by about **a/2** in the given example or somewhat less depending on the necessary clearance for a hose diameter of $d_{max}$. The tab-like members **131** move freely in guide slots **170** until they reach their end position furthest away from the leg portion **114.** At that point, contraction of the clamp, i.e., reduction of **d** will commence. This is so as at that point, contraction of the ear will cause the outer band portions on both sides of the ear to move in opposite direction toward the leg portions **114** and **115** of the ear, absent the previous possibility of lost motion, while the inner clamping band portion **111b** now also moves with its tab-like members **131** away from the end of the guide slots **163'** near the leg portion **115** of the tightening device **113** toward the right as viewed in Figure 10. The excess length of the guide slots **170** over the length of the tab-like members **131** can be chosen at will but should preferably not be greater than the distance corresponding to the "initial plastic deformation" in order not to reduce unnecessarily the tolerance range. In practice, it may be advantageous for the excess length **n** of the guide slots **170** to be slightly less than the "initial plastic deformation" distance of the ear. As the tab-like members **121** remain fixed in their position relative to the guide slots **163'** during the "initial plastic deformation" of the ear while the lost motion arrangement is in operation, the step-like portion **167** can now be moved toward the leg portion **115** by a distance corresponding to about **a/2** or by a somewhat greater distance leaving a distance **a/2⁺** between point **D** and the beginning of the step-like portion **167** for precautionary reasons, and the previous distance between points **D** and **F** of Figures 2-5 can now be reduced by the same distance of about **a/2.** This, in turn, will permit a reduction in the length of the tongue-like member **161.**

By utilizing a lost-motion arrangement in accordance with this invention, it is also possible to determine accurately and thereby optimize the maximum diametric dimension $d_{max}$ for a predetermined tolerance range of a given size clamp. Moreover, if the distance **m** corresponds substantially to the length of the arc of a clamp having a maximum diameter $d_{max}$ for a given nominal clamp size, such a clamp cannot be installed over a hose whose actual diameter is greater than $d_{max}$ because the tab-like members **121** can no longer be engaged in guide slots **163'** due to the shift in position of the inner band portion **111b** relative to the outer band portion **111a** necessitated by the increased diameter of the hose. This means that by properly choosing the distance **n** the use of a mechanical connection with the guide arrangement of this invention prevents the installation of a given clamp size over a hose whose diameter is greater than $d_{max}$ of the given clamp size.

Moreover, if only support hooks **131** are used in the mechanical connection according to this invention, the length of the outer band portion from leg portion **114** to the free end of the outer band portion **111a** may also be reduced somewhat compared to the mechanical connection **31, 32** and **35** of Figure 1.

Additionally, if an axial installation of the clamp is desired, the clamp may be preassembled in closed condition by merely bending the outer ends of at least the tab-like members **131.** The same may be done with respect to the tab-like members **121** if so desired. Depending on the maximum tensional forces in the clamp and the type of clamping band material, the lost-motion arrangement might also be realized with only a single support hook in the form of a tab-like member.

The lost-motion arrangement of Figure 13 provides a pre-assembly position for the clamp once the tab-like members **121** and **131** engage in their respective guide slots **163'** and **170** as a result of the frictional engagement between surfaces **121a** and **167a** and between surfaces **131a** and **170a** (Figure 13). The amount of friction between these surfaces can be controlled by the value of dimension m and/or by roughening some or all of these surfaces by conventional means, for example, by using dull cutting edges in the die establishing the surfaces to be roughened.

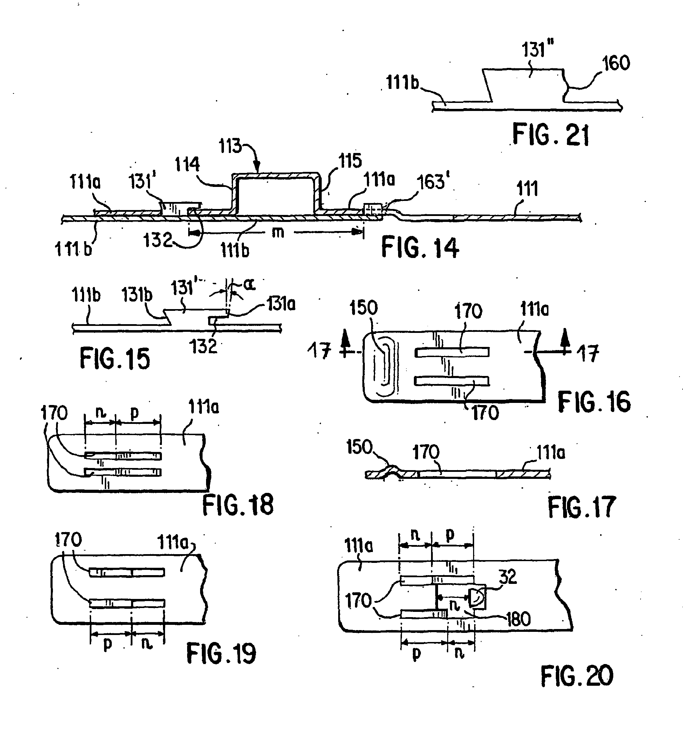

If a more positive pre-assembly is desired rather than relying on friction alone, the tab-like members **131'** may be provided with an undercut **132** (Figures 14 and 15) along the inner end of the edge **131a** with a radial height somewhat larger than the thickness of the clamping band. The circumferential depth of the undercut **132** may be chosen at will as long as the dimension m is adjusted accordingly as shown in Figure 14. The leading edge **131b** may thereby be inclined forwardly as known in the art to provide a guide function while the trailing edge **131a** may be at right angle to the surface of the clamping band. In the alternative, the trailing edge **131a** may also be provided with a slight inclination (angle $\alpha$ in Figure 15) outwardly in the direction toward the ear **113** which in conjunction with the undercut **132** or in lieu thereof may serve as an assist in the attainment of the pre-assembly position. A small nub-like projection **160** in the edge surface **131a** (Figure 21) may serve the same purpose.

To protect against undesired tearing out of the clamping band material at the end of the guide slots **170** near the free end of the outer clamping band portion **111a, x** the latter may be provided with one or several cold-deformed, deep-drawn reinforcing means in the form of one or more corrugation-like embossment **150** (Figures 16 and 17) in the area between the free end of the outer clamping band portion **111a** and the adjacent end of slots **170.** In the alternative, an oppositely directed indentation(s) may also be used for the same purpose.

In case the use of two laterally spaced support hooks **131** proves inadequate, one or more so-called deep-drawn support hooks **32** as shown in Figure 1 herein may also be used in addition thereto. In that case, the aperture for the deep-drawn support hook must also provide a lost-motion for such a support hook to the same extent as the lost-motion for the tab-like members **131.** Additionally, two such support hooks may also be used. Furthermore, the lost-motion arrangement may also be used with a mechanical connection as shown in the prior art clamp of Figure 1. In that case, the circumferential length of the apertures **35** will have to be lengthened.

If an additional deep-drawn support hook is decided upon for the clamp, a space-saving arrangement may be used a shown in Figure **20** in which the abutment edge of the support hook **32** extends through an opening **180** in the outer clamp portion as shown. The position of a tab-like member **131** in the condition of the clamp with the mechanical connection engaged but prior to tightening the tightening device is shown in the upper part of Figure 20 while the position of the tab-like member in the lower half corresponds to a contraction of the ear up to and beyond "initial plastic deformation." If the space **180** eliminates altogether the inner clamping band material between the guide slots **170**, then the length P of the tab-like members **131** is preferably greater than the length of the removed inner walls of the guide slots so that the tab-like member already extends into a fully formed part of the respective guide slot. This assures proper movement of the tab-like members in the guide slots already at the beginning of contraction of the ear.

The tab-like members **121** and/or **131** may also decrease in height in the direction toward the tightening device **113** so as to facilitate emplacement of the jaws of the tightening tool in the form of a pincer-like device (see Figure 9). The reduction in height may thereby resemble the shape of the jaws of the tightening tool, particularly insofar as the tab-like members **121** are concerned in order to permit these tab-like members to be located as close to the tightening device as possible.

While I have shown and described several embodiments in accordance with the present invention, it is understood that the same is not limited thereto, but is susceptible of numerous changes and modifications as known to those skilled in the art. For example, the ear may be modified to provide an extended tolerance range as disclosed in my prior U.S. Patent 6,247,206 either with or without the guide indentations at the inner ends of the leg portions. Furthermore, this invention is also applicable to other tightening devices, such as, for example, screw-type tightening devices as disclosed, for instance, in U.S. Patent 4,521,940. Thus, the present invention is not limited to the details shown and described herein, and I therefore do not wish to be limited to the details shown and described but intend to cover all such changes and modifications as are encompassed by the scope of the appended claims.

## Claims

1.   A clamp, comprising clamping band means **(11)** having clamping band end portions intended to form overlapping inner and outer band portions **(11b, 11a; 111a, 111b)** in the installed condition, a connection **(31, 32, 35; 131,** 170) operable to connect the overlapping band portions, a tightening device **(13, 113)** for tightening the clamping band means about an object to be fastened thereby, said tightening device (13; 113) forming a gap in the circumferential direction of the clamping band means, and further means **(61, 62, 63; 67; 163, 167, 161)** assuring gap-free and stepless internal clamping surfaces of the clamping band means including a male member **(61; 161)** near the end of the inner band portion (11b; 111b) adapted to cooperate with a female member **(67; 167)** in the outer band portion (11a; 111a), said male member (61; 161) having a width less than the full band width, wherein said male member **(61; 161)** is provided with a bent-up tab-like member **(21; 121)** on each side thereof, and said outer band portion **(11a; 111a)** is provided with an opening for engagement by said tab-like members **(21; 121)** to guide relative movements of the inner and outer band portions during tightening of the tightening device (13; 113), **characterized in that** said outer band portion **(11a; 111a)** is provided with two guide slots **(63'; 163')** each for engagement by one of said tab-like members **(21; 121).**

2. A clamp according to claim 1, **characterized in that** the bent-up tab-like members **(21; 121)** on each side of the male member **(61; 161)** are of smaller length than the male member.

3. A clamp according to claim 2, **characterized in that** said tab-like members **(21; 121)** are provided only in the free end area of the male member.

4. A clamp according to claim 1, **characterized in that** at least some of said tab-like members (21; 121) decrease in height in the direction toward the tightening device.

5. A clamp according to claim 4, **characterized in that** said height decrease is curvilinear.

6. A clamp according to claim 1, wherein said tightening device is a plastically deformable ear requiring a predetermined initial plastic deformation to function properly as tightening device producing predetermined clamping forces and is defined by two outwardly extending leg portions (14, 15) interconnected by a bridging portion (16), **characterized in that** said connection includes means (131, 170) enabling partial tightening of the tightening device up to reaching the initial plastic deformation substantially without change in the diametric dimension of the clamp.

7. A clamp according to claim 6, **characterized in that** said outwardly extending leg portions (14, 15; 114, 115) are substantially parallel to one another.

8. A clamp according to claim 6, **characterized in that** said outwardly extending leg portions (14, 15; 114, 115) are non-parallel to one another, and **in that** the spacing between the inner ends of the leg portions is greater than the length of the bridging portion (16, 116).

9. A clamp according to claim 6, **characterized in that**, in the non-tightened condition of the clamp with said connection operable to connect the overlapping band portions, the full band width of the inner clamping band portion (11b; 111b) covers said gap and terminates a predetermined distance from the side of said tightening device opposite the free end of the outer clamping band portion; and **in that** said female member is defined by a step-like portion (67; 167) in the outer clamping band portion (11a; 111a), the beginning of said step-like portion (67; 167) being located from the end of the full band width inner clamping band portion by a distance at least equal to a distance corresponding to maximum tightening of the tightening device.

10. A clamp according to claim 9, **characterized in that** said guide slots (63'; 163) extend in said outer band portion (11a; 111a) in such a manner that said male member (61; 161) overlaps said step-like portion (67; 167) at least when said ear has attained its predetermined initial plastic deformation.

11. A clamp according to claim 6, **characterized in that**, in the non-tightened condition of the clamp with said connection operable to connect the overlapping band portions, the transition from full band width of the inner clamping band portion (11b; 111b) to the male member (61; 161) is located in the area between said leg portions (14, 15; 114, 115) at a location determined by said initial plastic deformation, and **in that** said female member is defined by a step-like portion (67; 167) in the outer clamping band portion (11a;111a), the beginning of said step-like portion being located from the leg portion (15; 115) remote from the free end of the outer clamping band portion by a distance determined by said predetermined initial plastic deformation, and said guide slots (63, 163') extend in said outer band portion in such a manner that said male member (61; 161) overlaps said step-like portion (67; 167) at least when said ear has attained its predetermined initial plastic deformation.

12. A clamp according to claim 1, **characterized in that** said connection includes at least one guide hook (31) and one deep-drawn support hook (32) in the inner clamping band portion (11b) operable to engage in apertures (35) in the outer clamping band portion (11a).

13. A clamp according to claim 1, **characterized in that** said connection includes two transversely spaced tab-like means (131, 131', 131'') bent-up on each side of and forming support hooks in the inner band portion engaging in guide slot means (170) in the outer clamping band portion, and **in that** said support hooks (131, 131', 131'') are formed by a bent-up tab-like member on each side of the inner clamping band portion.

14. A clamp according to claim 13, **characterized in that** said guide slot means (170) are of greater length in the circumferential direction of the clamp than the tab-like means (131, 131', 131'') to realize a lost-motion between overlapping band portions during tightening of the tightening device so as to at least minimize thereby a decrease in the diametric dimension of the clamp during initial tightening of the tightening device (113).

15. A clamp according to claim 1, **characterized in that** the tightening device (113) is a plastically deformable ear requiring a predetermined initial plastic deformation for proper functioning when the clamp reaches its dimension $d_{max}$ of the tolerance range, **in that** said connection includes at least one bent-up tab-like member (131, 131', 131'') forming a support hook means in the inner clamping band portion (111b) engaging in guide slot means (170) in the outer clamping band portion (111a), and **in that** each guide slot means (170) is of greater length in the circumferential direction of the clamp than said support hook means (131, 131', 131'') to attain a lost motion between said inner and outer clamping band portions during initial contraction of the ear.

16. A clamp according to claim 15, **characterized in that** the length of said guide slot means (170) is greater than the length of said support hook means (131, 131', 131'') by a distance corresponding at most to the tightening distance necessary to realize the predetermined plastic deformation of said ear.

17. A clamp according to claim 16, **characterized in that** said support hook means (131, 131', 131'') include two transversely spaced support hook means each formed by a bent-up tab-like member on each side of the inner clamping band portion (111b).

18. A clamp according to claim 16, **characterized in that** the tab-like members (121) of said male member (161) and of said support hook means (131, 131', 131'') are located in said clamping band means at such a circumferential distance from one another that in the position of said support hook means (131,131',131") engaging said guide slot means (170) in the end area thereof nearer the tightening device, the tab-like members (121) of said male member (161) are in a position engaging said guide slots (163') in the end area thereof nearer the tightening device.

19. A clamp according to claim 16, **characterized in that** the tab-like members (21, 121) of said male member have a length less than the length of said male member (61, 161).

20. A clamp according to claim 15, further comprising preassembly means for reducing the risk of reopening of the clamp after said tab-like means have engaged in said guide slot means.

21. A clamp according to claim 20, **characterized in that** said preassembly means includes an undercut (132) in the edge of the tab-like means near said tightening device.

22. A clamp according to claim 13, **characterized inn that** the distance between said guide slots (163') and said guide slot means (170) is such that the tab-like members (121) and the support hooks (131) can engage in the respective guide slots (163') and guide slot means (170) only when the diameter of a hose does not exceed $d_{max}$ for a given clamp size.

23. A clamp according to claim 20, **characterized in that** said preassembly means has a rear edge configuration with a nub-like projection (160) extending toward said tightening device (Figure 21).

24. A clamp according to claim 13, **characterized in that** the connection further includes a cold-deformed, deep-drawn support hook (32) in the inner clamping band portion (111b) following said support hooks (131) in the direction towards the free end of the inner clamping band portion (111b), wherein an opening (180) is formed in the outer clamping band portion (111a) in the area of the guide slot means (170) nearer the tightening device (113) through which the deep-drawn support hook (32) can extend and move during the lost-motion operation of the connection.

**Patentansprüche**

1. Klemme, umfassend eine Klemmbandeinrichtung (11) mit Klemmband-Endabschnitten, die im eingebauten Zustand einander überlappende innere und äußere Bandabschnitte (11 b, 11 a; 111 a, 111 b) bilden sollen, einer zum Verbinden der einander überlappenden Bandabschnitte betätigbaren Verbindung (31, 32, 35; 131, 170), einer Spanneinrichtung (13, 113) zum Spannen der Klemmbandeinrichtung um einen **dadurch** zu befestigenden Gegenstand, wobei die Spanneinrichtung (13; 113) in Umfangsrichtung der Klemmbandeinrichtung eine Lücke bildet, sowie einer weiteren Einrichtung (61, 62, 63; 67; 163, 167, 161), die lücken- und stufenlose innere Klemmflächen der Klemmbandeinrichtung sicherstellt und nahe dem Ende des inneren Bandabschnitts (11b; 111b) ein Einführteil (61 161) zum Eingriff in ein Aufnahmeteil (67; 167) im äußeren Bandabschnitt (11a; 111a) aufweist, wobei das Einführteil (61; 161) eine Breite hat, die geringer ist als die volle Bandbreite, wobei das Einführteil (61; 161) an seinen beiden Seiten mit einem aufgebogenen lappenartigen Teil (21; 121) versehen ist und wobei der äußere Bandabschnitt (11a; 111a) mit einer Öffnung zum Eingriff durch die lappenartigen Teile (21; 121) versehen ist, um Relativbewegungen zwischen dem inneren und dem äußeren Bandabschnitt während des Spannens der Spanneinrichtung (13; 113) zu führen,

**dadurch gekennzeichnet, dass** der äußere Bandabschnitt (11a; 111a) mit zwei Führungsschlitzen (63'; 163') zum Eingriff durch jeweils eines der lappenartigen Teile (21; 121) versehen ist.

2. Klemme nach Anspruch 1, **dadurch gekennzeichnet, dass** die aufgebogenen lappenartigen Teile (21; 121) auf beiden Seiten des Einführteils (61; 161) kürzer sind als das Einführteil.

3. Klemme nach Anspruch 2, **dadurch gekennzeichnet, dass** die lappenartigen Teile (21; 121) nur im freien Endbereich des Einführteils vorgesehen sind.

4. Klemme nach Anspruch 1, **dadurch gekennzeichnet, dass** mindestens einige der lappenartigen Teile (21; 121) in Richtung der Spanneinrichtung in der Höhe abnehmen.

5. Klemme nach Anspruch 4, **dadurch gekennzeichnet, dass** die Höhe längs einer gekrümmten Linie abnimmt.

6. Klemme nach Anspruch 1, wobei die Spanneinrichtung ein plastisch verformbares Ohr ist, das eine vorbestimmte plastische Anfangsverformung erfordert, um als Spanneinrichtung zur Erzeugung vorbestimmter Klemmkräfte ordnungsgemäß zu funktionieren, und das von zwei nach außen ragenden und über einen Brückenabschnitt (16) miteinander verbundenen Beinabschnitten (14, 15) definiert ist, **dadurch gekennzeichnet, dass** die Verbindung eine Einrichtung (131; 170) aufweist, die ein teilweises Spannen der Spanneinrichtung bis zum Erreichen der plastischen Anfangsverformung im wesentlichen ohne Durchmesserveränderung der Klemme gestattet.

7. Klemme nach Anspruch 6, **dadurch gekennzeichnet, dass** die nach außen ragenden Beinabschnitte (14, 15; 114, 115) im wesentlichen parallel zueinander stehen.

8. Klemme nach Anspruch 6, **dadurch gekennzeichnet, dass** die nach außen ragenden Beinabschnitte (14, 15; 114, 115) nicht parallel zueinander stehen und der Abstand zwischen ihren inneren Enden größer ist als die Länge des Brückenabschnitts (16; 116).

9. Klemme nach Anspruch 6, **dadurch gekennzeichnet, dass** im ungespannten Zustand der Klemme, in dem die Verbindung zum Verbinden der einander überlappenden Bandabschnitte betätigbar ist, die volle Bandbreite des inneren Klemmbandabschnitts (11b; 111b) die besagte Lücke überdeckt und in vorgegebenem Abstand von der vom freien Ende des äußeren Klemmbandabschnitts abgewandten Seite der Spanneinrichtung endet, und dass das Aufnahmeteil von einem im äußeren Klemmbandabschnitt (11a; 111a) vorhandenen stufenartigen Abschnitt (67; 167) definiert ist, dessen Anfang sich vom Ende des inneren Bandabschnitts mit voller Bandbreite in einem Abstand befindet, der mindestens gleich ist einem der maximalen Spannung der Spanneinrichtung entsprechenden Weg.

10. Klemme nach Anspruch 9, **dadurch gekennzeichnet, dass** die Führungsschlitze (63'; 163) im äußeren Bandabschnitt (11a; 111a) derart verlaufen, dass das Einführteil (61; 161) den stufenartigen Abschnitt (67; 167) mindestens dann überlappt, wenn das Ohr seine vorgegebene plastische Anfangsverformung erreicht hat.

11. Klemme nach Anspruch 6, **dadurch gekennzeichnet, dass** im ungespannten Zustand der Klemme, in dem die Verbindung zum Verbinden der überlappenden Bandabschnitte betätigbar ist, der Übergang von der vollen Bandbreite des inneren Klemmbandabschnitts (11b; 111b) in das Einführteil (61; 161) sich in dem Bereich zwischen den Beinabschnitten (14, 15; 114, 115) an einer von der plastischen Anfangsverformung bestimmten Stelle befindet, und dass das Aufnahmeteil von einem im äußeren Klemmbandabschnitt (11a; 111a) vorhandenen stufenartigen Abschnitt (67; 167) definiert ist, dessen Anfang sich von dem vom freien Ende des äußeren Klemmbandabschnitts entfernten Beinabschnitt (15; 115) in einem Abstand befindet, der von der vorgegebenen plastischen Anfangsverformung bestimmt ist, und dass die Führungsschlitze (63; 163') im äußeren Bandabschnitt derart verlaufen, dass das Einführteil (61; 161) den stufenartigen Abschnitt (67; 167) mindestens dann überlappt, wenn das Ohr seine vorgegebene plastische Anfangsverformung erreicht hat.

12. Klemme nach Anspruch 1, **dadurch gekennzeichnet, dass** die Verbindung mindestens einen Führungshaken (31) und einen tiefgezogenen Stützhaken (32) aufweist, die im inneren Klemmbandabschnitt (11 b) liegen und so betätigbar sind, dass sie in Öffnungen (35) im äußeren Klemmbandabschnitt (11a) eingreifen.

13. Klemme nach Anspruch 1, **dadurch gekennzeichnet, dass** die Verbindung zwei in Querrichtung in Abstand voneinander angeordnete lappenartige Einrichtungen (131, 131', 131") aufweist, die auf beiden Seiten des inneren Klemmbandabschnitts aufgebogen sind und Stützhaken bilden, die in Führungsschlitze (170) im äußeren Klemmbandabschnitt eingreifen, und dass die Stützhaken (131, 131', 131") durch auf beiden Seiten des inneren Klemmbandabschnitts aufgebogene lappenartige Teile gebildet sind.

14. Klemme nach Anspruch 13, **dadurch gekennzeichnet, dass** die Führungsschlitzeinrichtung (170) in Umfangsrichtung der Klemme länger ist als die lappenartigen Einrichtungen (131, 131', 131"), um beim Spannen der Spanneinrichtung zwischen den einander überlappenden Bandabschnitten eine Leerbewegung zu erreichen und **dadurch** während des anfänglichen Spannens der Spanneinrichtung (113) eine Durchmesserverringerung mindestens so gering wie möglich zu machen.

15. Klemme nach Anspruch 1, **dadurch gekennzeichnet, dass** die Spanneinrichtung (113) ein plastisch verformbares Ohr ist, die eine vorgegebene plastische Anfangsverformung erfordert, um ordnungsgemäß zu funktionieren, wenn die Klemme ihre Abmessung $d_{max}$ des Toleranzbereichs erreicht, dass die Verbindung mindestens ein aufgebogenes lappenartiges Teil (131, 131', 131") aufweist, das am inneren Klemmbandabschnitt (111 b) eine in eine Führungsschlitzeinrichtung (170) im äußeren Klemmbandabschnitt (111 a) eingreifenden Stützhakeneinrichtung bildet, und dass jede Führungsschlitzeinrichtung (170) in Umfangsrichtung der Klemme länger ist als die Stützhakeneinrichtung (131, 131', 131"), um während der anfänglichen Verengung des Ohrs eine Leerbewegung zwischen dem inneren und dem äußeren Klemmbandabschnitt zu erreichen.

16. Klemme nach Anspruch 15, **dadurch gekennzeichnet, dass** die Führungsschlitzeinrichtung (170) gegenüber der Stützhakeneinrichtung (131, 131', 131") um ein Maß länger ist, das mindestens dem zur Erzielung der vorgegebenen plastischen Verformung des Ohrs erforderlichen Spannweg entspricht.

17. Klemme nach Anspruch 16, **dadurch gekennzeichnet, dass** die Stützhakeneinrichtung (131, 131', 131") zwei in Querrichtung in Abstand voneinander angeordnete Stützhakeneinrichtungen aufweist, die jeweils von aufgebogenen lappenartigen Teilen an beiden Seiten des inneren Klemmbandabschnitts (111 b) gebildet sind.

18. Klemme nach Anspruch 16, **dadurch gekennzeichnet, dass** die lappenartigen Teile (121) des Einführteils (161) und der Stützhakeneinrichtung (131, 131', 131") in der Klemmbandeinrichtung in Umfangsrichtung in einem derartigen Abstand voneinander angeordnet sind, dass in der Position, in der die Stützhakeneinrichtung (131, 131', 131") in die Führungsschlitzeinrichtung (170) in ihrem der Spanneinrichtung benachbarten Endbereich eingreifen, die lappenartigen Teile (121) des Einführteils (161) sich in einer Position befinden, in der sie in die Führungsschlitze (161') an deren der Spanneinrichtung benachbartem Endbereich eingreifen.

19. Klemme nach Anspruch 16, **dadurch gekennzeichnet, dass** die lappenartigen Teile (21, 121) des Einführteils kürzer sind als das Einführteil (61, 161).

20. Klemme nach Anspruch 15 mit einer Vormontiereinrichtung zur Verringerung der Gefahr, dass sich die Klemme öffnet, nachdem die lappenartige Einrichtung in die Führungsschlitzeinrichtung eingegriffen hat.

21. Klemme nach Anspruch 20, **dadurch gekennzeichnet, dass** die Vormontiereinrichtung eine Hinterschneidung (132) in der der Spanneinrichtung benachbarten Kante der lappenartigen Einrichtung aufweist.

22. Klemme nach Anspruch 13, **dadurch gekennzeichnet, dass** der Abstand zu den Führungsschlitzen (163') und der Führungsschlitzeinrichtung (170) so bemessen ist, dass die lappenartigen Teile (121) und die Stützhaken (131) in die Führungsschlitze (163') bzw. die Führungsschlitzeinrichtung (170) eingreifen können, wenn der Durchmesser eines Schlauchs das Maß $d_{max}$ bei gegebener Klemmengröße nicht überschreitet.

23. Klemme nach Anspruch 20, **dadurch gekennzeichnet, dass** die Vormontiereinrichtung eine Hinterkantengestaltung mit einem der Spanneinrichtung zugewandten knopfartigen Vorsprung (160) aufweist (Fig. 21).

24. Klemme nach Anspruch 13, **dadurch gekennzeichnet, dass** die Verbindung ferner einen kaltverformten, tiefgezogenen Stützhaken (32) am inneren Klemmbandabschnitt (111 b) aufweist, der in Richtung des freien Endes des inneren Klemmbandabschnitts (111 b) auf die Stützhaken (131) folgt, wobei im äußeren Klemmbandabschnitt (111 a) in dem der Spanneinrichtung (113) benachbarten Bereich der Führungsschlitzeinrichtung (170) eine Öffnung (180) ausgebildet ist, durch die hindurch sich der tiefgezogene Stützhaken (32) während der Leerbewegung der Verbindung erstrecken und bewegen kann.

## Revendications

1.  Collier de serrage, comprenant des moyens formant bande de serrage (11) comportant des parties d'extrémité de bande de serrage destinées à former des parties de bande intérieure et extérieure se chevauchant (11b, 11a ; 111a, 111b) dans la condition installée, une liaison (31, 32, 35 ; 131, 170) pouvant être utilisée pour relier les parties de bande se chevauchant, un dispositif de serrage (13, 113) pour serrer les moyens formant bande de serrage autour d'un objet devant être fixé par ceux-ci, ledit dispositif de serrage (13, 113) formant un espace dans la direction circonférentielle des moyens formant bande de serrage, et des moyens supplémentaires (61, 62, 63 ; 67 ; 163, 167, 161) assurant des surfaces de serrage internes sans espace et sans gradin des moyens formant bande de serrage comprenant un élément mâle (61 ; 161) à proximité de l'extrémité de la partie de bande interne (11b ; 111b) adapté pour coopérer avec un élément femelle (67 ; 167) dans la partie de bande externe (11a ; 111a), ledit élément mâle (61 ; 161) ayant une largeur inférieure à la largeur de bande entière, dans lequel ledit élément mâle (61 ; 161) est pourvu d'un élément semblable à une patte (21 ; 121) replié vers le haut de chaque côté de celui-ci, et ladite partie de bande externe (11a ; 111a) est pourvue d'une ouverture pour l'engagement desdits éléments semblables à des pattes (21 ; 121) pour guider les mouvements relatifs des parties de bande interne et externe pendant le serrage du dispositif de serrage (13 ; 113),
    **caractérisé en ce que** ladite partie de bande externe (11a ; 111a) est pourvue de deux fentes de guidage (63' ; 163') chacune pour l'engagement de l'un desdits éléments semblables à des pattes (21 ; 121).

2.  Collier de serrage selon la revendication 1, **caractérisé en ce que** la longueur des éléments semblables à des pattes (21 ; 121) pliés vers le haut de chaque côté de l'élément mâle (61 ; 161) est inférieure à celle de l'élément mâle.

3.  Collier de serrage selon la revendication 2, **caractérisé en ce que** lesdits éléments semblables à des pattes (21 ; 121) sont prévus uniquement dans la région d'extrémité libre de l'élément mâle.

4.  Collier de serrage selon la revendication 1, **caractérisé en ce que** la hauteur d'au moins certains desdits éléments semblables à des pattes (21 ; 121) diminue dans la direction vers le dispositif de serrage.

5.  Collier de serrage selon la revendication 4, **caractérisé en ce que** ladite diminution de hauteur est curviligne.

6.  Collier de serrage selon la revendication 1, dans lequel ledit dispositif de serrage est une oreille déformable plastiquement nécessitant une déformation plastique initiale prédéterminée pour fonctionner correctement en tant que dispositif de serrage produisant des forces de serrage prédéterminées et est défini par deux parties formant ailes (14, 15) s'étendant vers l'extérieur reliées l'une à l'autre par une partie formant pont (16), **caractérisé en ce que** ladite liaison comprend des moyens (131, 170) permettant un serrage partiel du dispositif de serrage jusqu'à l'obtention de la déformation plastique initiale sensiblement sans changement de la dimension diamétrale du collier de serrage.

7.  Collier de serrage selon la revendication 6, **caractérisé en ce que** lesdites parties formant ailes (14, 15 ; 114, 115) s'étendant vers l'extérieur sont sensiblement parallèles l'une à l'autre.

8.  Collier de serrage selon la revendication 6, **caractérisé en ce que** lesdites parties formant ailes (14, 15 ; 114, 115) s'étendant vers l'extérieur ne sont pas parallèles l'une à l'autre, et **en ce que** l'espacement entre les extrémités internes des parties formant ailes est supérieur à la longueur de la partie formant pont (16, 116).

9.  Collier de serrage selon la revendication 6, **caractérisé en ce que,** dans la condition non serrée du collier de serrage avec ladite liaison pouvant être utilisée pour relier les parties de bande se chevauchant, la largeur de bande entière de la partie de bande de serrage interne (11b ; 111b) recouvre ledit espace et se termine à une distance prédéterminée du côté dudit dispositif de serrage opposé à l'extrémité libre de la partie de bande de serrage externe ; et **en ce que** ledit élément femelle est défini par une partie formant gradin (67 ; 167) dans la partie de bande de serrage externe (11a ; 111a), le commencement de ladite partie formant gradin (67 ; 167) étant situé à une distance de l'extrémité de la partie de bande de serrage interne à largeur de bande entière au moins égale à une distance correspondant au serrage maximum du dispositif de serrage.

10. Collier de serrage selon la revendication 9, **caractérisé en ce que** lesdites fentes de guidage (63' ; 163) s'étendent dans ladite partie de bande externe (11a ; 111a) de manière à ce que ledit élément mâle (61 ; 161) recouvre ladite partie formant gradin (67 ; 167) au moins lorsque ladite oreille a atteint sa déformation plastique initiale prédéterminée.

11. Collier de serrage selon la revendication 6, **caractérisé en ce que,** dans la condition non serrée du collier de serrage avec ladite liaison pouvant être utilisée pour relier les parties de bande se chevauchant, la transition de la largeur de bande entière de la partie de bande de serrage interne (11b ; 111b) à l'élément mâle (61 ; 161) est située dans la zone entre lesdites parties formant ailes (14, 15 ; 114, 115) à un emplacement déterminé par ladite déformation plastique initiale, et **en ce que** ledit élément femelle est défini par une partie formant gradin (67 ; 167) dans la partie de bande de serrage externe (11a ; 111a), le commencement de ladite partie formant gradin étant situé à une distance de la partie formant aile (15 ; 115) éloignée de l'extrémité libre de la partie de bande de serrage externe déterminée par ladite déformation plastique initiale prédéterminée, et lesdites fentes de guidage (63, 163') s'étendent dans ladite partie de bande externe de manière à ce que ledit élément mâle (61 ; 161) recouvre ladite partie formant gradin (67 ; 167) au moins lorsque ladite oreille a atteint sa déformation plastique initiale prédéterminée.

12. Collier de serrage selon la revendication 1, **caractérisé en ce que** ladite liaison comprend au moins un crochet de guidage (31) et un crochet de support (32) embouti dans la partie de bande de serrage interne (11b) pouvant être utilisés pour s'engager dans des ouvertures (35) dans la partie de bande de serrage externe (11a).

13. Collier de serrage selon la revendication 1, **caractérisé en ce que** ladite liaison comprend deux moyens semblables à des pattes (131, 131', 131") espacés transversalement pliés vers le haut de chaque côté de la partie de bande interne et formant des crochets de support dans celle-ci s'engageant dans des moyens formant fentes de guidage (170) dans la partie de bande de serrage externe, et **en ce que** lesdits crochets de support (131, 131', 131") sont formés par un élément semblable à une patte replié vers le haut de chaque côté de la partie de bande de serrage interne.

14. Collier de serrage selon la revendication 13, **caractérisé en ce que** la longueur desdits moyens formant fentes de guidage (170) dans la direction circonférentielle du collier de serrage est supérieure à celle des moyens semblables à des pattes (131, 131', 131") pour réaliser un mouvement perdu entre les parties de bande se chevauchant pendant le serrage du dispositif de serrage de manière à au moins réduire à un minimum de ce fait une diminution de la dimension diamétrale du collier de serrage pendant le serrage initial du dispositif de serrage (113).

15. Collier de serrage selon la revendication 1, **caractérisé en ce que** le dispositif de serrage (113) est une oreille déformable plastiquement nécessitant une déformation plastique initiale prédéterminée pour un fonctionnement correct lorsque le collier de serrage atteint sa dimension $d_{max}$ de la plage de tolérance, **en ce que** ladite liaison comprend au moins un élément semblable à une patte (131, 131', 131") replié vers le haut formant des moyens formant crochets de support dans la partie de bande de serrage interne (111b) s'engageant dans des moyens formant fentes de guidage (170) dans la partie de bande de serrage externe (111a), et **en ce que** la longueur de chaque moyen formant fente de guidage (170) dans la direction circonférentielle du collier de serrage est supérieure à celle desdits moyens formant crochets de support (131, 131', 131") pour obtenir un mouvement perdu entre lesdites parties de bande de serrage interne et externe pendant la contraction initiale de l'oreille.

16. Collier de serrage selon la revendication 15, **caractérisé en ce que** la longueur desdits moyens formant fentes de guidage (170) est supérieure à la longueur desdits moyens formant crochets de support (131, 131', 131") d'une distance correspondant au plus à la distance de serrage nécessaire pour réaliser la déformation plastique prédéterminée de ladite oreille.

17. Collier de serrage selon la revendication 16, **caractérisé en ce que** lesdits moyens formant crochets de support (131, 131', 131") comprennent deux moyens formant crochets de support espacés transversalement formés chacun par un élément semblable à une patte plié vers le haut de chaque côté de la partie de bande de serrage interne (111b).

18. Collier de serrage selon la revendication 16, **caractérisé en ce que** les éléments semblables à des pattes (121) dudit élément mâle (161) et desdits moyens formant crochets de support (131, 131', 131") sont situés dans lesdits moyens formant bande de serrage à une distance circonférentielle les uns des autres telle que, dans la position desdits moyens formant crochets de support (131, 131', 131") s'engageant dans lesdits moyens formant fentes de guidage (170) dans leur zone d'extrémité plus proche du dispositif de serrage, les éléments semblables à des pattes (121) dudit élément mâle (161) sont à une position s'engageant dans lesdites fentes de guidage (163') dans leur zone d'extrémité plus proche du dispositif de serrage.

**19.** Collier de serrage selon la revendication 16, **caractérisé en ce que** les éléments semblables à des pattes (21, 121) dudit élément mâle ont une longueur inférieure à la longueur dudit élément mâle (61, 161).

**20.** Collier de serrage selon la revendication 15, comprenant en outre des moyens de préassemblage pour réduire le risque de réouverture du collier de serrage après l'engagement desdits moyens semblables à des pattes dans lesdits moyens formant fentes de guidage.

**21.** Collier de serrage selon la revendication 20, **caractérisé en ce que** lesdits moyens de préassemblage comprennent une encoche (132) dans le bord des moyens semblables à des pattes à proximité dudit dispositif de serrage.

**22.** Collier de serrage selon la revendication 13, **caractérisé en ce que** la distance entre lesdites fentes de guidage (163') et lesdits moyens formant fentes de guidage (170) est telle que les éléments semblables à des pattes (121) et les crochets de support (131) ne peuvent s'engager dans les fentes de guidage (163') et les moyens formant fentes de guidage (170) respectifs que lorsque le diamètre d'un tuyau ne dépasse pas $d_{max}$ pour une taille de collier de serrage donnée.

**23.** Collier de serrage selon la revendication 20, **caractérisé en ce que** lesdits moyens de préassemblage ont une configuration de bord arrière avec une protubérance semblable à un bouton (160) s'étendant vers ledit dispositif de serrage (figure 21).

**24.** Collier de serrage selon la revendication 13, **caractérisé en ce que** la liaison comprend en outre un crochet de support (32) embouti déformé à froid dans la partie de bande de serrage interne (111b) suivant lesdits crochets de support (131) dans la direction vers l'extrémité libre de la partie de bande de serrage interne (111b), dans lequel une ouverture (180) est formée dans la partie de bande de serrage externe (111a) dans la zone des moyens formant fentes de guidage (170) plus proche du dispositif de serrage (113) à travers laquelle le crochet de support (32) embouti peut s'étendre et se déplacer pendant l'opération de mouvement perdu de la liaison.

FIG.1

FIG.2

FIG.3

FIG.4

FIG.5

FIG.6

FIG.7

FIG.8

FIG.9

17

FIG.10

FIG.11

FIG.12

FIG.13

FIG. 21

FIG. 14

FIG.15

FIG.16

FIG.18

FIG.17

FIG.19

FIG.20

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4299012 A
- US 4315348 A
- US 5305499 A
- US 4712278 A
- US 5339496 A
- US 5544392 A
- US 5177836 A
- EP 1191270 A1
- US 6560823 B
- US 10044968 B
- US 6240603 B
- US 6457212 B
- US 5339406 A
- US 6243924 B
- US 6240603 B1
- US 6247206 B
- US 4521940 A